# FASCICULE DE BREVET EUROPEEN

(11) **EP 0 719 692 B1**
(45) Date de publication et mention de la délivrance du brevet: **02.09.1998**
(21) Numéro de dépôt: 95402764.5
(22) Date de dépôt: 07.12.1995
(51) Int. Cl.: B62B 3/02

(54) **Chariot de manutention repliable**
Faltbarer Lastförderwagen
Foldable load handling trolley

(30) Priorité: 29.12.1994 FR 9415851
(43) Date de publication de la demande: 03.07.1996
(73) Titulaire: ATELIERS REUNIS CADDIE, F-67301 Schiltigheim Cedex (FR)
(72) Inventeur: Joseph, Alice, F-67300 Schiltigheim (FR); Le Marchand, Alain, F-67116 Reichstett (FR)
(74) Mandataire: CABINET BONNET-THIRION

(56) Documents cités:
- DE-B- 1 087 568
- FR-A- 2 122 009
- FR-A- 2 596 349
- US-A- 2 186 368

## Description

La présente invention concerne un chariot de manutention repliable.

Le chariot est du type appelé couramment "roll" servant au transport de cartons, paquets ou cageots de marchandises empilés. Il comporte généralement un socle monté sur des roulettes, deux parois latérales ou ridelles et des sangles élastiques permettant de rapprocher les ridelles l'une vers l'autre pour améliorer la tenue des charges.

On a proposé plusieurs solutions pour ranger les chariots à vide.

La solution la plus ancienne consiste à prévoir des ridelles démontables. On stocke alors d'un côté les ridelles et de l'autre, les socles qui peuvent par exemple être empilés les uns sur les autres dans un chariot non démonté.

Une autre solution a été de prévoir une grille de fond pivotante, et des ridelles rabattables contre un socle présentant une forme en "Z" ou une forme trapézoïdale en "U" ou en "A" autorisant l'encastrement d'un autre socle.

La présente invention a pour but de proposer une autre solution encore pour le rangement à vide des chariots.

Elle propose un chariot de manutention repliable muni de roulettes et d'une grille pivotante, caractérisé en ce qu'il comporte un socle en croix articulé à deux branches et deux montants en "U" inversé, chaque montant ayant une partie terminale première solidaire d'une extrémité d'une des branches du socle et une autre partie terminale seconde libre et susceptible d'être fixée à une extrémité de l'autre branche du socle.

La fixation des parties terminales secondes des montants au socle bloque l'articulation de ce dernier. Le chariot se trouve alors en configuration de fonctionnement, une grille de fond pouvant être agencée sur le socle.

Lorsque les parties terminales secondes des montants sont désolidarisées du socle et la grille relevée, l'articulation de ce dernier redevient possible. Le socle peut être plié par le resserrement de ses deux branches l'une contre l'autre. Dans cette configuration repliée du socle, les montants, solidaires du socle par leur partie terminale première respective, se retrouvent disposés dans des plans globalement parallèles et rapprochés l'un de l'autre.

Le passage d'une configuration à une autre du chariot s'opère donc de manière très simple. Les chariots en configuration repliée peuvent être rangés les uns à côté des autres dans un volume réduit.

Selon un premier mode de réalisation possible, les parties terminales premières de chaque montant sont fixées chacune sur une branche différente du socle.

Selon un second mode de réalisation possible, les parties terminales premières de chaque montant sont fixées chacune sur une même branche du socle.

Ces deux constructions présentent des avantages. La première permet de fabriquer un modèle unique de branche, comprenant à une extrémité des moyens pour la fixation permanente de la partie terminale première d'un premier montant et à l'autre extrémité des moyens pour la fixation le cas échéant de la partie terminale seconde du second montant. La seconde construction permet au chariot replié d'occuper un volume qui peut être plus favorable au rangement, notamment en évitant que des extrémités des branches du socle ne dépassent.

Suivant d'autres caractéristiques, la fixation de la partie terminale seconde des montants s'opère par emboîtement dans un logement tandis que la fixation de la partie terminale première s'opère dans une douille dans laquelle elle est adaptée à coulisser pour permettre l'emboîtement de la partie terminale seconde du socle et par rapport à laquelle elle est adaptée à pivoter pour permettre le rapprochement des montants vers le socle lorsque ce dernier est replié.

Selon une autre disposition encore, des moyens sont prévus pour fixer au socle les parties terminales secondes des montants lorsque le socle est replié, comprenant des logements de verrouillage ménagés sur le socle adaptés à recevoir par emboîtement lesdites parties terminales secondes des montants.

La présente invention sera mieux comprise et d'autres avantages apparaîtront à la lumière de la description qui va suivre d'un exemple de réalisation, description faite en référence aux dessins annexés sur lesquels :
- la figure 1 est une vue schématique en perspective montrant le chariot en configuration de fonctionnement avec la grille en position relevée ;
- la figure 2 est une vue similaire à la figure 1 illustrant une phase intermédiaire du passage à la configuration de rangement du chariot ; et
- la figure 3 est une vue similaire également montrant le chariot en configuration de rangement.

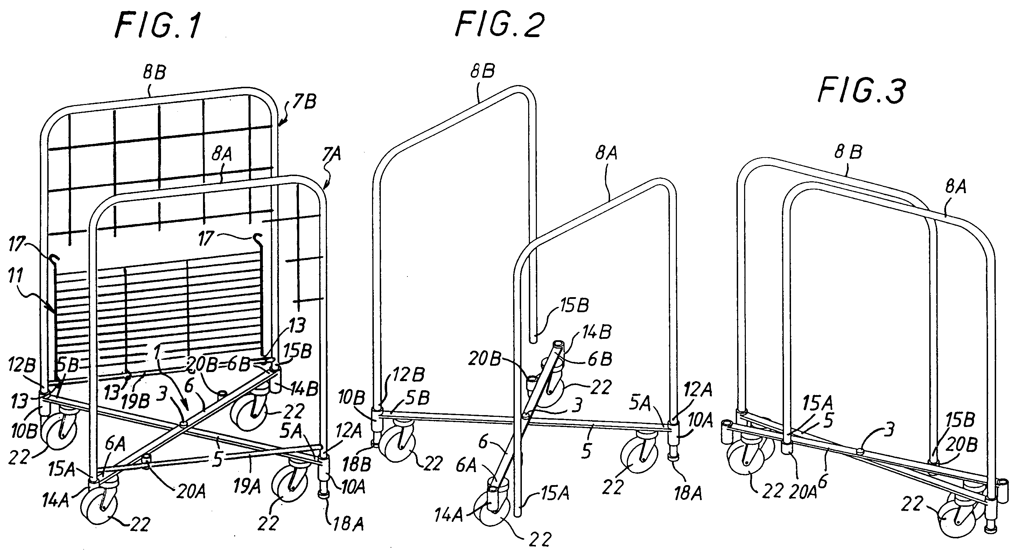

Selon l'exemple de réalisation représenté sur les figures, le chariot comprend un socle 1 en croix avec deux branches première 5 et seconde 6 articulées autour d'un pivot central 3 de manière à être rapprochées l'une de l'autre comme représenté sur la figure 3, et deux parois latérales ou ridelles 7A, 7B constituées chacune d'un montant 8A, 8B en "U" inversé et d'un quadrillage de fils soudés longitudinaux et transversaux. Le socle 1 est adapté à recevoir une grille de fond 11 comprenant d'un côté des oeillets 13 d'articulation sur une tige 19B ménagée à la base de la ridelle 7B et de l'autre des crochets 17 adaptés à coopérer avec une tige 19A ménagée à la base de la ridelle 7A de manière à permettre le verrouillage des ridelles parallèles l'une à l'autre.

Pour faciliter la lecture de la figure 1, le quadrillage de fils soudés des ridelles est représenté partiellement seulement et la grille de fond 11 est représentée en position relevée. Par ailleurs pour alléger les figures 2 et 3, ces éléments n'ont pas été représentés.

A chacune de ses extrémités 5A, 5B, la première branche 5 du socle comprend une douille dite de première branche 10A, 10B dans laquelle est adaptée à coulisser et à pivoter l'une des parties terminales dite première 12A, 12B de chaque montant 8A, 8B. Des moyens de blocage du coulissement des parties terminales premières 12A, 12B dans les douilles 10A, 10B, sont prévus comprenant une rondelle de butée 18A, 18B prévue à l'extrémité de chaque partie terminale première 12A, 12B adaptée à bloquer le coulissement.

A chacune de ses extrémités 6A, 6B, la seconde branche 6 du socle comprend une douille dite de seconde branche 14A, 14B dans laquelle est adaptée à s'emboîter l'autre partie terminale dite seconde 15A, 15B des montants 8A, 8B. Des moyens de blocage de l'emboîtement des parties terminales secondes 15A, 15B des montants 8A, 8B dans les douilles 14A, 14B sont prévus comprenant un fond ménagé dans lesdites douilles 14A, 14B.

Le long de la seconde branche 6 du socle, sur les bords opposés de celle-ci, sont ménagées deux douilles dites de verrouillage 20A, 20B à une distance du point d'articulation central 3 et de l'extrémité 6A ou 6B de la branche 6 telle que, lorsque le chariot est en configuration de rangement, comme représenté sur la figure 3, les parties terminales secondes 15A, 15B des montants 8A, 8B sont susceptibles d'être emboîtées dans lesdites douilles de verrouillage 20A, 20B. Des moyens de blocage de l'emboîtement des parties terminales secondes 15A, 15B dans lesdits logements de verrouillage 20A, 20B sont prévus.

Les extrémités supérieures des douilles de première branche 10A, 10B, des douilles de seconde branche 14A, 14B et des douilles de verrouillage 20A, 20B affleurent légèrement au dessus des branches 5 et 6 du socle.

Chaque montant 8A, 8B possède ainsi une partie terminale première 12A, 12B, solidaire du socle 1 et une partie terminale seconde libre 15A, 15B susceptible d'être emboîtée soit dans la douille de seconde branche correspondante 14A, 14B lorsque le chariot est en configuration de fonctionnement comme représenté à la figure 1, soit dans la douille de verrouillage 20A, 20B lorsque le chariot est en configuration de rangement comme représenté à la figure 3.

Quatre roulettes 22 sont fixées sous le socle 1 aux extrémités des branches 5 et 6 légèrement en retrait par rapport aux douilles de première et seconde branches 10A, 10B et 14A, 14B.

Le chariot se plie de la manière suivante. On relève la grille 11, les parties terminales secondes 15A, 15B de chaque montant 8A, 8B sont déboîtées des douilles de première branche 14A, 14B. Cette opération est rendue possible grâce au coulissement de l'autre partie terminale 12A, 12B du montant dans la douille de seconde branche correspondante 10A, 10B, la rondelle de butée 18A empêchant la désolidarisation des montants. Comme on le voit sur la figure 2, la branche seconde 6 du socle est alors libre de pivoter. On peut la rapprocher de la branche première 5, puis faire pivoter les montants 8A, 8B dans les douilles de première branche 10A, 10B et emboîter les parties terminales secondes libres 15A, 15B des montants dans les douilles de verrouillage 20A, 20B en faisant coulisser à nouveau les parties terminales premières 12A, 12B dans les douilles de première branche 10A, 10B. Le chariot se trouve alors verrouillé dans la position de rangement représentée à la figure 3.

Il va de soi que des variantes de réalisation sont possibles, notamment on peut concevoir que la fixation du montant 8A soit inversée, la fixation de la partie terminale première 12A s'effectuant à l'extrémité 6A de la branche 6 et l'emboîtement de la partie terminale seconde 15A s'effectuant à l'extrémité 5A de la branche 5. La douille de verrouillage 20A pourra être disposée sur la branche 5 entre le pivot central 3 et l'extrémité 5A de la branche 5. Cette construction permet avantageusement d'avoir un seul modèle de branche pour le socle.

On peut par ailleurs mettre en oeuvre d'autres moyens de fixation et de pivotement des montants sur les branches du socle.

## Revendications

1. Chariot de manutention repliable muni de roulettes et d'une grille pivotante, caractérisé en ce qu'il comporte un socle (1) en croix articulé à deux branches (5,6) et deux montants (8A, 8B) en "U" inversé, chaque montant ayant une partie terminale première (12A,12B) solidaire d'une extrémité (5A,5B) d'une des branches du socle et une autre partie terminale seconde (15A,15B) libre et susceptible d'être fixée à une extrémité (6A,6B) de l'autre branche du socle.

2. Chariot selon la revendication 1, caractérisé en ce que les parties terminales premières (12A,12B) de chaque montant (8A,8B) sont fixées chacune à une extrémité respective (5A, 5B) d'une même branche (5) du socle.

3. Chariot selon la revendication 1, caractérisé en ce que les parties terminales premières (12A,12B) de chaque montant (8A,8B) sont fixées chacune à l'extrémité d'une branche différente (5,6) du socle.

4. Chariot selon l'une quelconque des revendications précédentes, caractérisé en ce que la fixation des parties terminales premières (12A,12B) de montant s'opère dans une douille (10A,10B) dans laquelle ladite partie terminale première est adaptée à coulisser et à pivoter.

5. Chariot selon l'une quelconque des revendications précédentes, caractérisé en ce que la fixation des parties terminales secondes (15A,15B) de montant s'opère par emboîtement dans un logement (14A,14B).

6. Chariot selon la revendication 5, caractérisé en ce que ledit logement est une douille (14A,14B).

7. Chariot selon l'une quelconque des revendications précédentes, caractérisé par deux moyens de verrouillage (20A, 20B) ménagés sur le socle (1) coopérant chacune avec la partie terminale seconde (15A,15B) de chaque montant (8A,8B) pour verrouiller le socle en configuration repliée.

8. Chariot selon la revendication 6, caractérisé en ce que lesdits moyens de verrouillage sont des douilles (20A,20B) adaptées à recevoir par emboîtement lesdites parties terminales secondes (15A,15B).

9. Chariot selon l'une quelconque des revendications 4 à 7, caractérisé par des moyens de blocage (18A,18B) du coulissement des parties terminales premières (12A,12B) dans lesdites douilles (10A, 10B).

10. Chariot selon l'une quelconque des revendications 5 à 9, caractérisé par des moyens de blocage de l'emboîtement des parties terminales secondes (15A,15B) dans lesdits logements (14A,14B).

11. Chariot selon l'une quelconque des revendications 7 à 10, caractérisé par des moyens de blocage de l'emboîtement des parties terminales secondes (15A,15B) des montants (8A, 8B) dans lesdits logements de verrouillage (20A,20B).

## Claims

1. A folding handling trolley provided with castors and a pivoting grid, characterised in that it comprises a base (1) in the form of a cross articulated at two arms (5,6) and two inverted U-shaped uprights (8A,8B), each upright having a first end portion (12A,12B) attached to one end (5A,5B) of one of the arms of the base and another second free end portion (15A,15B) which can be secured to one end (6A,6B) of the other arm of the base.

2. A trolley according to Claim 1, characterized in that the first end portions (12A,12B) of each upright (8A,8B) are each secured to a respective end (5A,5B) of the same arm (5) of the base.

3. A trolley according to Claim 1, characterized in that the first end portions (12A,12B) of each upright (8A,8B) are each secured to the end of a different arm (5,6) of the base.

4. A trolley according to any one of the preceding Claims, characterized in that the securing of the first end portions (12A,12B) of the upright is effected in a sleeve (10A,10B) in which said first end portion is adapted to slide and to pivot.

5. A trolley according to any one of the preceding Claims, characterized in that the securing of the second end portions (15A,15B) of the upright is effected by fitting into a socket (14A,14B).

6. A trolley according to Claim 5, characterized in that said socket is a sleeve (14A,14B).

7. A trolley according to any one of the preceding Claims, characterized by two locking means (20A,20B) provided on the base (1), each co-operating with the second end portion (15A,15B) of each upright (8A,8B) to lock the base in a folded configuration.

8. A trolley according to Claim 6, characterised in that said locking means are sockets (20A,20B) adapted to receive by fitting said second end portions (15A,15B).

9. A trolley according to any one of Claims 4 to 7, characterized by means (18A,18B) for blocking the sliding of the first end portions (12A,12B) in said sleeves (10A,10B).

10. A trolley according to any one of Claims 5 to 9, characterised by means for blocking the fitting of the second end portions (15A,15B) in said sockets (14A,14B).

11. A trolley according to any one of Claims 7 to 10, characterized by means for blocking the fitting of the second end portions (15A,15B) of the uprights (8A,8B) in said locking sockets (20A,20B).

## Patentansprüche

1. Zusammenfaltbarer Transportwagen mit Rollen und einem schwenkbaren Gitterteil, dadurch gekennzeichnet, daß er einen kreuzförmigen Sockel (1) aus zwei gelenkig verbundenen Armen (5,6) und zwei Ständerteile (8A,8B) in Form eines umgekehrten "U" umfaßt, wobei jeder Ständerteil einen ersten Endbereich (12A,12B) aufweist, der mit einem Ende (5A,5B) des einen Arms des Sockelteils verbunden ist und einen zweiten, freien Endbereich (15A,15B) aufweist, der geeignet ist, an einem Ende (6A,6B) des anderen Arms des Sockelteils befestigt zu werden.

2. Wagen nach Anspruch 1, dadurch gekennzeichnet, daß die ersten Endbereiche (12A,12B) jedes Ständerteils (8A,8B) jeweils an einem entsprechenden Ende (5A,5B) des einen Armes (5) des Sockelteils befestigt sind.

3. Wagen nach Anspruch 1, dadurch gekennzeichnet, daß die ersten Endbereiche (12A,12B) jedes Ständerteils (8A,8B) jeweils an dem Ende eines anderen Armes (5,6) des Sockelteils befestigt sind.

4. Wagen nach einem der vorigen Ansprüche, dadurch gekennzeichnet, daß die Befestigung der ersten Endbereiche (12A,12B) im Bereich einer Aufnahme, wie Hülse, Buchse oder Muffe (10A,10B) erfolgt, an welche Aufnahme der Endbereich so angepaßt ist, daß er gleiten und schwenken kann.

5. Wagen nach einem der vorigen Ansprüche, dadurch gekennzeichnet, daß die Befestigung der zweiten Endbereiche (15A,15B) durch Einfügen in eine Aufnahme (14A,14B) erfolgt.

6. Wagen nach Anspruch 5, dadurch gekennzeichnet, daß die Aufnahme eine Hülse, Buchse oder Muffe (14A,14B) ist.

7. Wagen nach einem der vorigen Ansprüche, dadurch gekennzeichnet, daß zwei Verriegelungsmittel (20A,20B), die in dem Sockelteil (1) vorgesehen sind, jeweils mit dem zweiten Endbereich (15A,15B) jedes Ständerteils (8A,8B) zur Verriegelung des Sockels in einer zusammengefalteten Konfiguration zusammenwirken.

8. Wagen nach Anspruch 7, dadurch gekennzeichnet, daß die Verriegelungsmittel Hülsen, Buchsen oder Muffen (20A,20B) sind, die so angepaßt sind, daß sie die zweiten Endbereiche (15A,15B) durch Einfügen aufnehmen können.

9. Wagen nach einem voriger Ansprüche 4 bis 7, dadurch gekennzeichnet, daß Blockiermittel (18A,18B) zum Blockieren des Gleitens der ersten Endbereiche (12A,12B) in den Aufnahmen (10A,10B) vorgesehen sind.

10. Wagen nach einem voriger Ansprüche 5 bis 9, dadurch gekennzeichnet, daß Mittel zum Blockieren des Einfügens der zweiten Endbereiche (15A,15B) in die Aufnahmen (14A,14B) vorgesehen sind.

11. Wagen nach einem voriger Ansprüche 7 bis 10, dadurch gekennzeichnet, daß Mittel zum Blockieren des Einfügens der zweiten Endbereiche (15A,15B) der Ständerteile (8A,8B) in den Verriegelungs-Aufnahmen (20A,20B) vorgesehen sind.
